## Europäisches Patentamt

### European Patent Office

### Office européen des brevets

(19)

(11) Publication number:

**0 085 981**
**B1**

(12)

## EUROPEAN PATENT SPECIFICATION

(45) Date of publication of patent specification: **27.08.86**

(51) Int. Cl.⁴: **G 01 N 21/45**

(21) Application number: **83101165.5**

(22) Date of filing: **08.02.83**

(54) **Method of and apparatus for determining the refractive-index profile of optical fibres and optical-fibre preforms.**

(30) Priority: **10.02.82 IT 6715082**

(43) Date of publication of application:
**17.08.83 Bulletin 83/33**

(45) Publication of the grant of the patent:
**27.08.86 Bulletin 86/35**

(84) Designated Contracting States:
**DE FR GB NL**

(56) References cited:
**US-A-3 881 823**

**SOVIET JOURNAL OF QUANTUM ELECTRONICS, vol. 9, no. 10, October 1979, pages 1332-1334, Ed. Plenam, New York, USA, V. KORONKEVICH et al.: "Interference microscope with a frequency shift for the investigation of the refractive-index profiles of glass fibers"**

**PROCEEDINGS OF THE IEEE-OPT. COMM., vol. 68, no 6, June 1980, pages 666-688, New York, USA, D. MARCUSE et al.: "Index profile measurements of fibers and their evaluation"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Grego, Giorgio**
**C. so Grosseto, 190**
**Torino (IT)**

(74) Representative: **Riederer Freiherr von Paar zu Schönau, Anton et al**
**Freyung 615 Postfach 2664**
**D-8300 Landshut (DE)**

## Description

The present invention relates to a method of and an apparatus for determining the refractive-index profile of optical fibres or optical-fibre preforms.

The refractive-index profile of optical fibres is essential in determining a number of fibre important properties, e.g. light collection efficiency, guiding properties and bandwidth. It is important to know such profile already during fibre drawing, for instance, by making measurements on the preform, as the fibre properties are critically dependent on the preform properties. In this way interventions can be made to correct possible anomalies. Obviously the refractive-index profile is to be determined by non-destructve methods, i.e. methods which do not require cutting away a fibre or preform piece.

An apparatus for non-destructive measurement of the refractive-index profile of an optical-fibre preform is commercially available, and its operating principles are also expounded in the paper by I. Sasaki, D. N. Payne, R. J. Mansfield and M. J. Adams entitled "Variation of refractive-index profiles in single-mode fibre preforms measured using an improved high-resolution spatial-filtering technique" presented at the 6th European Conference on Optical Communications, York 16—19 September 1980. In this apparatus, a monochromatic light beam illuminates a zone of the side surface of a preform which is moved step by step along a plane perpendicular to the beam; the beam rays, reflected at angles dependent on the refractive-index profile, are collected by a spherical lens which establishes a one-to-one correspondence between the refraction angles and the points of a straight line of its focal plane; a rotating spatial filter, placed in such a plane, sweeps the difference points of such straight line, and the refraction angle values, and consequently the refractive-index profile, are obtained by measuring the time elapsing between the instant at which spatial filter passes a reference point and the instant at which the individual refracted rays are intercepted (instants signalled by a photodiode placed in a convenient image plane). Yet this system is rather complicated and consequently expensive, due to both the presence of moving devices (the preform and the spatial filter) and to the necessity for an accurate synchronization of the movements of such devices to provide precise measurement results.

Another known apparatus acknowledged in the prior art portion of claims 1 and 6 is known from Soviet Journal Of Quantum Electronics, vol. 9, No. 10, October 1979, pages 1332 to 1334, Ed. Plenam, New York, article by V. Koronkevich et al. This apparatus uses rays at different polarization, one of them passing laterally through the fibre. From the resulting pattern of fringes, a small part is selected by an aperture and used for further evaluation. For obtaining the requested profile, the fibre is laterally displaced. Such system, however, entails measurement inaccuracies due to a focussing optical system and due to the displacement of the fibre, and makes it difficult to obtain a continuous observation.

The purpose of the present invention is to provide a method of and an apparatus for very precisely determining the refractive-index profile of an optical fibre or optical-fibre preform, which require neither moving devices nor means for synchronizing same and which are simple and cheap.

The method of determining the refractive-index profile of an optical fibre or an optical-fibre preform according to the present invention, comprising the steps of generating a beam comprising two light radiations at slightly different frequencies; separating the two radiations so as to generate a first and a second monochromatic partial beam; generating electrical signals at a frequency equal to the difference between said two frequencies, said electrical signals representing the beats between the radiations of the first monochromatic partial beam, which is made to follow a fixed optical path, and of the second monochromatic partial beam, which is made to follow a path crossing the fibre or preform under test; measuring the phase differences, due to the optical-path differences, between said beats and a reference beat obtained from radiations at said two frequencies which have followed a further path not passing through the fibre or preform; and obtaining the refractive-index profile of the fibre or preform from said phase differences, is characterized in that before separation of said radiations, the beam is expanded so that its cross section and that of said partial beams has a size at least equal to that of the fibre or preform under test, and the beat distribution between the radiations of the first and of the second monochromatic partial beams is obtained from the whole cross-sections of said partial beams.

An apparatus for carrying out the method of the invention, said apparatus comprising: a source of a light beam comprising two radiations having slightly different frequencies; an optical system, arranged to split the beam into two monochromatic partial beams and to send one of the two partial beams along a fixed optical path, and the other one along a path which crosses the fibre or preform under test; means for holding the fibre or preform under test and containing index matching fluid; a photodetector arrangement placed downstream the fibre or preform under test, which receives the rays of both the first and the second monochromatic partial beams and generates electrical signals at a frequency equal to the difference between the frequencies of the two radiations, said electrical signals representing the beats between the radiations of the two monochromatic partial beams; a phase comparison system which receives said electrical signals and a reference beat signal at the same frequency obtained from radiations, at said two frequencies, which have followed a further path not passing through the fibre or preform, and generates signals representative of the phase difference between said electrical signals and the reference signal; and a computing system, arranged to compute the refractive-index profile from the phase difference values, according to the invention is characterized in that a beam expander is positioned in the optical path between the source and the fibre or preform under test, which beam expander raises the whole cross-section of said beam and thus of said first and second monochromatic partial beams to a value at least equal to the cross-sectional size of the fibre or preform, and the photodetector arrangement is arranged to receive the whole cross-section of each of the two monochromatic partial beams.

For clarity purposes reference is made to the annexed Figure, schematically representing a preferred embodiment of the invention, given by way of a non limiting example.

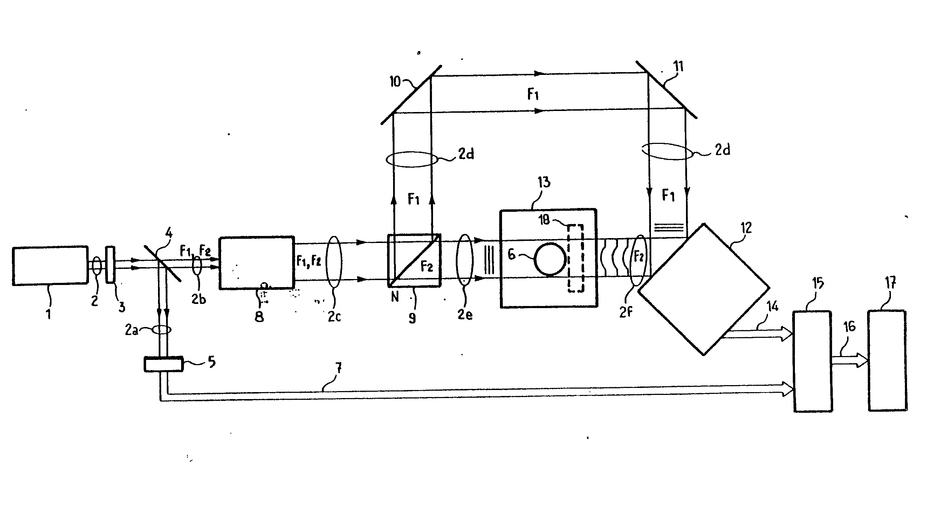

As shown in the Figure, a light ray source 1, e.g. a Zeeman-effect, He-Ne laser emits a beam 2 of plane waves, consisting of radiations with two slightly difference frequencies F1, F2, in particular radiations with a frequency difference of about 2 MHz. The radiations at the two frequencies are circularly polarized in opposite directions. It is essential for the frequency difference to be constant in time, for reasons which will become clearer from the following description.

Through a quarter wave plate 3, which transforms the circularly-polarized radiations into two linearly-polarized radiations with orthogonal planes of polarization, beam 2 is sent to a beam splitter 4, which sends a first portion 2a of beam 2 onto a photodiode 5 along a path which does not cross fibre or preform 6 under test.

A low-frequency electrical signal, representing the beat between the radiations at frequencies F1, F2, is present at output 7 of photodiode 5.

A second portion 2b of beam 2 passes through splitter 4 and arrives onto a beam expander 8 which, if necessary, raises the diameter of the beam section up to a value equal to or greater than the diameter of preform or fibre 6; expanded beam 2c is collected by a polarizer 9 which separates the two radiations constituting the beam.

By a suitable optical system, schematized here by way of example by mirrors 10, 11, one of the two radiations, e.g. radiation 2d at frequency F1, is sent to a detector 12, also along a path which does not cross fibre or preform 6. Detector 12 can be a photodiode array or a telecamera apt to intercept the whole beam.

The second radiation 2e, at frequency F2, is sent to the same detector 12, following a path crossing fibre or preform 6 immersed in a cell filled with index-matching fluid. For drawing simplicity purposes, the various light beams 2 . . . 2e have been schematized by their external rays.

As an effect of the passage through preform or fibre 6, the plane wavefronts of beam 2e are distorted, assuming the concave shape shown in the Figure for refracted beam 2f.

The distortion obviously depends on the refractive-index profile of preform fibre 6.

An electrical signal at frequency F=F1—F2, representing the beat between the radiations of beams 2d, 2f, will be present at the output of each element of photodetector 12.

At a determined instant the phase-difference between each of these beat signals and the signal present on wire 7, depends on the refractive-index profile of the fibre or preform 6 according to relation:

$$n(\rho)-n_c=-\frac{\lambda}{2\pi^2}\rho\int^\infty \frac{d\Phi}{dr}\frac{dr}{\sqrt{r^2-\rho^2}} \tag{1}$$

where:

$\Phi$ is the phase of a ray crossing the fibre or preform at a distance r from the centre;

$n(\rho)$ is the refractive index of the fibre core at a distance $\rho<r$ from the centre;

$n_c$ is the refractive index of the cladding;

$\lambda$ is the wavelength of the light radiation used.

This relation is easily deduced from the analogous formula relative to the interference fringe behaviour in function of the refractive-index profile.

Obviously, if the beam diameter is greater than that of the fibre or preform, as shown in the Figure, the most external rays will not be refracted and therefore in correspondence with such rays the wavefront will not be distorted.

Detector output 14 is connected to a phase comparison system 15, which receives the signal present on wire 7 as reference signal; output 16 of phase comparator 15 is connected to a computing circuit 17, which obtains the refractive-index values from the signals present on such output, according to relation (1).

For a correct comparator operation, the signals present on wires 14 and 7 must have absolutely the same frequency. This is ensured by using as a source a single laser 1 which generates the two frequencies by Zeeman effect, by employing for instance a permanent magnet; as the difference between the two frequencies F1, F2 depends on the magnetic-field intensity, which is constant, and also the reference signal is obtained as a beat between the two radiations at frequencies F1, F2, it is clear that the compared beats satisfy the requirements.

The refractive-index profile of an unknown preform or fibre can also be obtained by comparison with a standard preform or fibre whose characteristics have been accurately determined.

For this purpose the complementary hologram 18 of the standard fibre or preform is inserted in series with fibre or preform 6 along the path of beam 2e or 2f, e.g. within or in place of cell 13.

The term "complementary hologram" denotes the hologram which introduces on a wavefront passing through it opposite distortions to those introduced by the preform or fibre. Hence a wavefront passing through both said fibre or preform and such complementary hologram will still be a plane wavefront.

Under these conditions, a residual distortion of the wavefronts of beam 2f, and hence a phase difference between the beat present at the output of detector 12 and on wire 7, will exist where fibre or preform 6 under test has different characteristics from the standard fibre or preform.

It is clear that what described has been given only by way of non limiting example and that variations and modifications are possible without going beyond the scope of the invention as defined by the claims.

Thus, for instance, in the case in which the cross section of beam 2e is greater than that of fibre or preform 6, the most external rays, as mentioned, do not undergo refraction; therefore, the beats between such rays and the corresponding rays in beam 2d can be used as reference beats. In this way photodetector 12 supplies also the phase reference and photodiode 5 can be dispensed with.

Moreover, a second polarizer could be inserted between cell 13 and detector 12 so as to combine the two beams 2d, 2f into a single beam which comprises both frequencies and is made to arrive on the detector perpendicularly instead of obliquely as in the Figure; in this way possible spurious reflections on the photodetector surface, which might affect the measurement, are eliminated.

## Claims

1. Method of determining the refractive-index profile of an optical fibre or of an optical-fibre preform, comprising the steps of: generating a beam (2) comprising two light radiations at slightly different frequencies; separating the two radiations so as to generate a first (2d) and a second (2e) monochromatic partial beam; generating electrical signals (14) at a frequency equal to the difference between said two frequencies, said electrical signals representing the beats between the radiations of the first monochromatic partial beam (2d), which is made to follow a fixed optical path (9, 10, 11, 12), and of the second monochromatic partial beam (2e), which is made to follow a path (9, 13, 12) crossing the fibre or preform (6) under test; measuring the phase differences, due to the optical-path differences, between said beats and a reference beat (7) obtained from radiations (2a) at said two frequencies which have followed a further path (4, 5) not passing through the fibre or preform; and obtaining the refractive-index profile of the fibre or preform from said phase differences, characterized in that before separation of said radiations the beam is expanded (2b—2c) so that its cross section and that of said partial beams has a size at least equal to that of the fibre or preform under test, and the beat distribution between the radiations of the first and of the second monochromatic partial beams is obtained from the whole cross-sections of said partial beams.

2. Method according to claim 1, characterized in that said two light radiations are obtained by a Zeeman effect laser (1).

3. Method according to claim 1 to 2, characterized in that said beam is expanded in such a manner that the second monochromatic partial beam comprises rays which are not refracted by the fibre or preform and the reference beat is generated between such rays and the corresponding rays in the first monochromatic partial beam.

4. Method according to any of claims 1 to 3, characterized in that a reference fibre or preform is used to cause said second monochromatic partial beam to undergo phase shifts opposite to those caused by said fibre or preform under test, and the refractive-index values are obtained by comparison with the reference fibre or preform.

5. Method according to any of claims 1 to 4, characterized in that said first and second monochromatic partial beams are recombined into a single beam prior to the beat signal generation.

6. Apparatus for carrying out the method according to any of claims 1 to 5, comprising:

— a source (1) of a light beam (2) comprising two radiations having slightly different frequencies (F1, F2);

— an optical system (9, 10, 11), arranged to split the beam (2c) into two monochromatic partial beams (2d, 2e) and to send one of the two partial beams (2d) along a fixed optical path, and the other one (2e) along a path which crosses the fibre or preform under test (6);

— means (13) for holding the fibre or preform under test (6) and containing index matching fluid;

— a photodetector arrangement (12) placed downstream the fibre or preform under test (6), which receives the rays of both the first and the second monochromatic partial beams (2d, 2e) and generates electrical signals at a frequency equal to the difference between the frequencies of the two radiations, said electrical signals representing the beats between the radiations of the two monochromatic partial beams (2d, 2e);

— a phase comparison system (15) which receives said electrical signals and a reference beat signal at the same frequency obtained from radiations, at said two frequencies, which have followed a further path both passing through the fibre or preform, and generates signals representative of the phase difference between said electrical signals and the reference signal;

— a computing system (17) arranged to compute the refractive-index profile from the phase difference values, characterized in that a beam expander (8) is positioned in the optical path between the source and the fibre or preform (6) under test, which beam expander (8) raises the whole cross-section of said beam (2c) and that of said first and second monochromatic partial beams to a value at least equal to the cross-sectional size of the fibre or preform (6), and the photodetector arrangement (12) is arranged to receive the whole cross-section of each of the two monochromatic partial beams (2d, 2e).

7. Apparatus according to claim 6, characterized in that said photodetector arrangement (12) is a photodiode array or a telecamera.

8. Apparatus according to claim 6 or 7, characterized in that said source is a Zeeman effect laser (1).

9. Apparatus according to any of claims 6 to 8, characterized in that said photodetector arrangement (12) generates also the reference beat.

10. Apparatus according to any of claims 6 to 9, characterized in that it comprises, in series with the preform or fibre under test (6), a complementary hologram (18) of a standard preform or fibre with known index profile, the computing system extracting the refractive-index values by comparison with the known values.

11. Apparatus according to any of claims 6 to 10, characterized in that it comprises, between the preform or fibre under test (6) and the photodetector arrangement (12), means for recombining the two monochromatic partial beams (2d, 2e) into a single beam.

**Patentansprüche**

1. Verfahren zum Bestimmen das Brechungsindexprofils einer optischen Faser oder der Vorform einer optischen Faser, mit folgenden Verfahrensschritten: Man erzeugt ein Strahlenbündel (2) aus zwei Lichtstrahlungen, die geringfügig unterschiedliche Frequenz aufweisen; man trennt die beiden Strahlungen so, daß ein erstes monochromatisches Teilbündel (2d) und ein zweites monochromatisches Teilbündel (2e) entstehen; man erzeugt elektrische Signale (14) mit einer Frequenz gleich der Differenz zwischen den beiden Frequenzen, wobei diese elektrischen Signale die Schwebungen zwischen den Strahlungen des ersten monochromatischen Teilbündels (2d), das entlang einem festen optischen Weg (9, 10, 11, 12) geleitet wird, und des zweiten monochromatischen Teilbündels (2e), das entlang einem die getestete Faser oder Vorform (6) durchquerenden Weg (9, 13, 12) geleitet wird, wiedergeben; man mißt die aus den Unterschieden der optischen Wege resultierenden Phasenunterschiede zwischen den Schwebungen und einer Bezugsschwebung (7), die man aus Strahlungen (2a) bei diesen beiden Frequenzen erhält, welche man über einen weiteren, die Faser oder Vorform nicht durchquerenden Weg (4, 5) geleitet hat; und man erhält das Brechungsindexprofil der Faser oder Vorform aus diesen Phasendifferenzen; dadurch gekennzeichnet, daß man vor der Trennung der Strahlungen das Bündel so expandiert (2b—2c), daß sein Querschnitt und der der Teilbündel eine Größe mindestens gleich der Größe der getesteten Faser oder Vorform aufweist, und aus den gesamten Querschnitten der Teilbündel die Schwebungsverteilung zwischen den Strahlungen des ersten monochromatischen Teilbündels und des zweiten monochromatischen Teilbündels gewinnt.

2. Verfahren nach Anspruch 1, dadurch gekennzeichnet, daß man die beiden Lichtstrahlungen durch einen Zeeman-Effekt-Laser (1) erhält.

3. Verfahren nach Anspruch 1 oder 2, dadurch gekennzeichnet, daß man das Bündel in der Weise expandiert, daß das zweite monochromatische Teilbündel Strahlen umfaßt, die nicht von der Faser oder Vorform gebrochen werden, und man die Bezugsschwebung zwischen diesen Strahlen und den entsprechenden Strahlen im ersten monochromatischen Teilbündel erzeugt.

4. Verfahren nach einem der Ansprüche 1 bis 3, dadurch gekennzeichnet, daß man durch Verwendung einer Bezugsfaser oder -vorform bewirkt, daß das zweite monochromatische Teilbündel Phasenverschiebungen unterworfen wird, die entgegengesetzt den von der getesteten Faser oder Vorform verursachten Phasenverschiebungen sind, und die Brechungsindexwerte durch Vergleich mit der Bezugsfaser oder -vorform erhält.

5. Verfahren nach einem der Ansprüche 1 bis 4, dadurch gekennzeichnet, daß das erste und das zweite monochromatische Teilbündel vor der Erzeugung des Schwebungssignals zu einem einzigen Bündel re-kombiniert werden.

6. Vorrichtung zur Durchführung des Verfahrens nach einem der Ansprüche 1 bis 5, mit folgenden Teilen:

— einer Quelle (1) eines Lichstrahlenbündels (2), der zwei Strahlungen mit geringfügig unterschiedlichen Frequenzen (F1, F2) umfaßt;

— einem optischen System (9, 10, 11), das gemäß seiner Anlage das Bündel (2c) in zwei monochromatische Teilbündel (2d, 2e) aufspaltet und eines dieser Teilbündel (2d) entlang einem festen optischen Wert und das andere (2e) entlang einem Weg, der die getestete Faser oder Vorform (6) durchquert, sendet;

— einer Einrichtung (13), die die getestete Faser oder Vorform (6) hält und eine Indexanpassungsflüssigkeit enthält;

— einer Fotodetektorschaltung (12), die hinter der getesteten Faser oder Vorform (6) angeordnet ist, die Strahlen sowohl des ersten als auch des zweiten monochromatischen Teilbündels (2d, 2e) empfängt und elektrische Signale einer Frequenz gleich der Differenz zwischen den Frequenzen der beiden Strahlungen erzeugt, wobei die elektrischen Signale die Schwebungen zwischen den Strahlungen der beiden monochromatischen Teilbündel (2d, 2e) wiedergeben;

— einem Phasenvergleichsystem (15), das die folgenden Signale empfängt: die elektrischen Signale und ein Bezugsschwebungssignal gleicher Frequenz, das aus Strahlungen dieser beiden Frequenzen erhalten wird, die einem weiteren Weg, der nicht durch die Faser oder Vorform getreten ist, gefolgt sind; und das Signale erzeugt, die die Phasendifferenz zwischen den elektrischen Signalen und den Bezugssignale wiedergibt;

— einem Rechensystem (17), das gemäß seiner Anlage das Brechungsindexprofil aus den Phasendifferenzwerten berechnet, dadurch gekennzeichnet, daß in den optischen Weg zwischen der Quelle und der getesteten Faser oder Vorform (6) ein Bündelexpander (8) eingesetzt ist, der den Gesamtquerschnitt des Bündels (2c) und somit des ersten und des zweiten monochromatischen Teilbündels auf einen Wert erhöht, der mindestens gleich der Querschnittsgröße der Faser oder der Vorform (6) ist, und daß die Fotodetektor-Anordnung (12) so angelegt ist, daß sie den gesamten Querschnitt jedes der beiden monochromatischen Teilbündel (2d, 2e) empfängt.

7. Vorrichtung nach Anspruch 6, dadurch gekennzeichnet, daß die Fotodetektoranordnung (12) ein Reihenmuster von Fotodioden oder ein Telekamera ist.

8. Vorrichtung nach Anspruch 6 oder 7, dadurch gekennzeichnet, daß die Quelle ein Zeeman-Effekt-Laser (1) ist.

9. Vorrichtung nach einem der Ansprüche 6 bis 8, dadurch gekennzeichnet, daß die Fotodetektoranordnung (12) auch die Bezugsschwebung erzeugt.

10. Vorrichtung nach einem der Ansprüche 6 bis 9, dadurch gekennzeichnet, daß sie in Reihe mit der getesteten Vorform oder Faser (6) ein komplementäres Hologramm (18) einer Standard-Vorform oder -Faser mit bekanntem Indexprofil enthält und das Rechensystem die Werte des Brechungsindex durch Vergleich mit den bekannten Werten extrahiert.

11. Vorrichtung nach einem der Ansprüche 6 bis 10, dadurch gekennzeichnet, daß sie zwischen der getesteten Vorform oder Faser (6) und der Fotodetektoranordnung (12) Einrichtungen zum Re-Kombinieren der beiden monochromatischen Teilbündel (2d, 2e) zu einem einzigen Bündel umfaßt.

**Revendications**

1. Procédé pour mesurer le profil d'indice de réfraction d'une fibre optique ou d'une préforme de fibre optique, comprenant les opérations de: engendrer un faisceau (2) comprenant deux radiations lumineuses ayant des fréquences peu différentes; séparer les deux radiations de façon à engendrer un premier (2d) et un second (2e) faisceau partiel monochromatique; engendrer des signaux électriques (14) ayant une fréquence égale à la différence desdites deux fréquences, ces signaux électriques représentant les battements des radiations du premier faisceau partiel monochromatique (2d), qui a suivi un chemin optique fixe (9, 10, 11, 12), et du second faisceau partiel monochromatique (2e), qui a suivi un chemin (9, 13, 12) passant par la fibre ou préforme (6) testée; mesurer les différences de phase, deux aux différences du chemin optique, entre ces battements et un battement de référence (7) obtenu du radiations (2a) auxdites deux fréquences qui ont suivi un chemin ultérieur (4, 5) ne passant pas par la fibre ou préforme; et obtenir le profil de l'indice de réfraction de la fibre ou préforme à partir de ces différences phase; caractérisé en ce que, avant la séparation desdites radiations, on agrandit le faisceau (2b—2c) de façon que les dimensions de sa section et de celle des faisceaux partiels soient au moins égales aux dimensions de la section de la fibre ou préforme testée, et on obtient la distribution du battement enter les radiations du premier et du second faisceaux partiels monochromatiques à partir des sections entières desdites faisceaux partiels.

2. Procédé selon la revendication 1, caractérisé en ce que les deux radiations lumineuses sont obtenues par un laser à effet Zeeman (1).

3. Procédé selon la revendication 1 ou 2, caractérisé en ce qu'on agrandit ledit faisceau de façon telle que le second faisceau partiel monochromatique comprenne des rayons qui ne sont pas réfractés par la fibre ou préforme, et l'on engendre le battement de référence entre ces rayons et les rayons correspondants du premier faisceau partiel monochromatique.

4. Procédé selon l'une quelconque des revendications 1 à 3, caractérisé en ce qu'on emploie une fibre ou préforme de référence pour faire subir au second faisceau monochromatique partiel des déphasages complémentaires à ceux provoqués par la fibre ou préforme testée, et l'on obtient les valeurs de l'indice de réfraction par comparaison avec la fibre ou préforme de référence.

5. Procédé selon l'une quelconque des revendications 1 à 4, caractérisé en ce que le premier et second faisceaux partiels monochromatiques sont recombinés dans un seul faisceau avant qu'on engendre le signal de battement.

6. Dispositif pour la mise en oeuvre du procédé selon l'une quelconque des revendications 1 à 5, comprenant:

— une source (1) d'un faisceau de lumière (2) comprenant deux radiations avec fréquences peu différentes (F1, F2);

— un système optique (9, 10, 11), pour partager le faisceau (2c) en deux faisceaux partiels monochromatiques (2d, 2e) et pour envoyer l'un des deux faisceaux partiels (2d) le long d'un chemin optique fixe, et l'autre (2e) le long d'un chemin qui passe par la fibre ou préforme testée (6);

— des moyens (13) pour maintenir en position la fibre ou préforme testée (6), ce moyens contenant un fluide d'adaptation d'indice;

— un système photodétecteur (12) placé en aval de la fibre ou préforme testée (6), lequel reçoit les rayons du premier et du second faisceaux partiels monochromatiques (2d, 2e) et engendre des signaux électriques, dont la fréquence est égale à la différence des fréquences des deux radiations, ces signaux électriques réprésentant les battements des radiations des deux faisceaux partiels monochromatiques (2d; 2e);

— un système de comparaison de phase (15) qui reçoit ces signaux électriques et un signal de battement de référence, ayant la même fréquence, obtenu de radiations auxdites deux fréquences, qui ont suivi un chemin ultérieur qui ne passe pas par la fibre ou préforme, et engendre des signaux représentant la différence de phase entre lesdits signaux électriques et le signal de référence;

— un système de calcul (17) pour calculer le profil de l'indice de réfraction à partir des valeurs de la différence de phase, caractérisé en ce qu'un dispositif d'expansion du faisceau (8) est placé dans le chemin optique entre la source et la fibre ou préforme (6) testée, ce dispositif d'expansion du faisceau (8) agrandissant la section entière dudit faisceau (2c), et donc desdits premier et second faisceaux partiels monochromatiques, jusqu'à une valeur au moins égale aux dimensions de la section de la fibre ou préforme (6), et le système photodétecteur (12) est en mesure de recevoir la section entière de chacun des deux faisceaux partiels monochromatiques (2d, 2e).

7. Dispositif selon la revendication 6, caractérisé en ce que le système photodétecteur (12) est une matrice de photodiodes ou une caméra de télévision.

8. Dispositif selon la revendication 6 ou 7, caractérisé en ce que ladite source est un laser à effet Zeeman (1).

9. Dispositif selon l'une quelconque des revendications 6 à 8, caractérisé en ce que le système photodétecteur engendre également le battement de référence.

10. Dispositif selon l'une quelconque des revendications 6 à 9, caractérisé en ce qu'il comporte, en série avec la fibre ou préforme testée (6), un hologramme complémentaire (18) d'une fibre ou préforme étalon de profil connu d'indice de réfraction, le système de calcul obtenant les valeurs de l'indice de réfraction par comparaison avec les valeurs connues.

11. Dispositif selon l'une quelconque des revendications 6 à 10, caractérisé en ce qu'il comporte, entre la préforme ou fibre testée (6) et le système photodétecteur (12), des moyens pour recombiner dans un seul faisceau les deux faisceaux partiels monochromatiques (2d, 2e).